# EUROPÄISCHE PATENTSCHRIFT

(11) **EP 3 459 826 B1**
(45) Veröffentlichungstag und Bekanntmachung des Hinweises auf die Patenterteilung: **15.06.2022**
(21) Anmeldenummer: 18196432.1
(22) Anmeldetag: 25.09.2018
(51) Int. Cl.: B62D 6/00

(54) **HYDRAULIKAGGREGAT, VERFAHREN ZUM BETRIEB EINES HYDRAULIKAGGREGATS SOWIE LENKSYSTEM**
HYDRAULIC UNIT, METHOD FOR OPERATING A HYDRAULICS UNIT AND STEERING SYSTEM
UNITÉ HYDRAULIQUE, PROCÉDÉ DE FONCTIONNEMENT D'UNE UNITÉ HYDRAULIQUE AINSI QUE SYSTÈME DE DIRECTION

(30) Priorität: 26.09.2017 DE 102017122235
(43) Veröffentlichungstag der Anmeldung: 27.03.2019
(73) Patentinhaber: Weber-Hydraulik GmbH, 74363 Güglingen (DE)
(72) Erfinder: Dr. Winkler, Torsten, 74397 Pfaffenhofen (DE); Naumann, Ralf, 74397 Pfaffenhofen (DE)
(74) Vertreter: Lemcke, Brommer & Partner Patentanwälte Partnerschaft mbB

(56) Entgegenhaltungen:
- EP-A1- 2 927 093
- EP-A2- 1 944 514
- DE-A1- 10 037 829

## Beschreibung

Die vorliegende Erfindung betrifft ein Hydraulikaggregat zur Druckversorgung eines hydraulischen Lenksystems, ein Verfahren zum Betrieb eines Hydraulikaggregats zur Druckversorgung eines hydraulischen Lenksystems sowie ein Lenksystem.

Lenksysteme in Kraftfahrzeugen weisen heutzutage üblicherweise hydraulische Lenkkraftverstärker auf. Dazu werden hydraulische Lenkhilfepumpen in hydraulischen Lenksystemen zur Kraftunterstützung der Lenkbewegung eingesetzt.

Insbesondere im Bereich der Lenkung ist Sicherheit ein entscheidender Faktor. Um bei einem Ausfall einzelner Komponenten keine Blockade der kompletten Lenkung zu riskieren, sind üblicherweise Sicherheitsmechanismen vorgesehen. Zusätzlich sollte für den Störfall ein mechanischer Durchtrieb auf die Vorderachse der Lenkung möglich sein. Gerade bei Fahrzeugen mit hoher Achslast ist eine solche mechanische Lenkung jedoch extrem schwergängig und kaum zu handhaben. Hydraulische Lenksysteme ermöglichen hier flexible Konzepte mit Sicherungsmechanismen, die die Lenkung verlässlicher und sicherer machen.

Generell gibt es unterschiedliche Einsatzbereiche für entsprechende Lenksysteme, welche sich nach dem Ort des Einbaus und der Fahrzeugart unterscheiden lassen. Bei dem Ort des Einbaus unterscheidet man prinzipiell Vorder- und Hinterachse, hierunter fallen auch gelenkte zweite Vorderachsen. Gelenkte Hinterachsen werden wiederum eingeteilt in Vor- und Nachlaufachse, je nachdem ob der Einbauort vor oder hinter der angetriebenen Achse liegt.

Die Fahrzeugart unterscheidet sich letztendlich in der zulässigen Höchstgeschwindigkeit, welche dann unterschiedliche Anforderung an die jeweiligen Sicherheitskonzepte nach sich zieht.

Aus dem Stand der Technik ist es bekannt, Differentialzylinder einzusetzen, die einerseits mit dem Lenkhebel und andererseits mit der Achse des Fahrzeugs verbunden sind, so dass der Zylinder querkraftfrei im Kraftfluss liegt. Nachteilig ist jedoch, dass bei Differentialzylindern unterschiedlich große wirksame Flächen auf der Ringraumseite sowie auf der Kolbenseite vorliegen, so dass für gleiche Geschwindigkeiten in beide Richtungen eine angepasste Auslegung der Druckversorgung notwendig ist und sich im Endeffekt ein schlechterer Wirkungsgrad ergibt, da die Druckversorgung auf die zwei Eckpunkte großer Volumenstrom sowie kleiner Druck (Kolbenraum) und kleiner Volumenstrom mit hohem Druck (Ringraum) ausgelegt werden muss. Diese Auslegung erfolgt in der Regel auf identische hydraulische Leistung für beide Richtungen anhand eines virtuellen Arbeitspunktes und führt zu folgenden Eckpunkten:
- Um die geforderte Kraft mit dem Zylinder bereitstellen zu können, wird im Ringraum ein höherer Druck als in dem zugehörigen Kolbenraum benötigt. Dies erfordert dann motorseitig ein höheres Drehmoment.
- Um die vorgegebene Lenkgeschwindigkeit darstellen zu können, wird wiederum ein größerer Volumenstrom im Kolbenraum als im Ringraum benötigt. Dies erfordert motorseitig eine höhere Drehzahl.

Resultierend aus diesen beiden Eckwerten wird ein Motor benötigt, der sowohl für Drehzahl als auch Drehmoment auf die jeweiligen Extremwerte auszulegen ist. Dies führt dann zwangsläufig zu einer Druckversorgung, die bei großem Volumenstrom auch den hohen Druck bereitstellen kann. Der oben genannte virtuelle Arbeitspunkt existiert in dieser Form jedoch nicht und führt somit zu einer Überdimensionierung der Druckversorgung. Die sich daraus ergebenden Anforderungen an den Motor haben unmittelbaren Einfluss auf die Baugröße und gegebenenfalls auch noch auf den Wirkungsgrad des Motors.

Aus EP 2 927 093 A1 ist eine mittels Differentialzylindern gelenkte Nachlaufachse eines mehrachsigen, mobilen Krans bekannt, welche jedoch mit den beschriebenen Nachteilen verbunden ist.

Alternativ ist es bekannt, Gleichgangzylinder einzusetzen, die jeweils gleichgroße wirksame Flächen aufweisen. Nachteilig bei dieser Lösung ist jedoch, dass eine Verbindung von Zylinderrohr und Fahrzeugachse sowie von Kolbenstange und Lenkhebeln notwendig ist, die zu Querkräften abhängig vom Angriffswinkel der Lenkhebel auf die Kolbenstange führt. Daher werden Kolbenstangen mit einem größeren Durchmesser benötigt, um die auftretenden Querkräfte ertragen zu können. Um bei dann größerem Durchmesser der Kolbenstange bei vorgegebenen Drücken identische Kräfte erzeugen zu können, muss zwangsläufig der Zylinderdurchmesser ebenfalls größer werden.

Eine Lösung, die Gleichgangzylinder verwendet ist aus DE 100 37 829 A1 mit der oben genannten Wirkweise und den damit verbundenen Nachteilen bekannt. Ein anderes Lenksystem mit zwei Differentialzylindern ist aus EP 1 944 514 A2 bekannt. Die Kolbenräume der zwei Differenzialzylinder sind mittels einer Hydraulikleitung und die Ringräume der zwei Differenzialzylinder mittels einer anderen Hydraulikleitung paarweise miteinander verbunden.

Der Erfindung liegt daher die Aufgabe zugrunde, ein Hydraulikaggregat sowie ein Verfahren und ein Lenksystem mit einer erhöhten Ausfallsicherheit und Effizienz sowie einem geringen Bauraumbedarf vorzuschlagen.

Erfindungsgemäß wird die oben genannte Aufgabe gelöst durch ein Hydraulikaggregat mit den Merkmalen des Anspruchs 1, durch ein Verfahren mit den Merkmalen des Anspruchs 6 sowie durch ein Lenksystem mit den Merkmalen des Anspruchs 8. Vorteilhafte Ausgestaltungen finden sich in den abhängigen Ansprüchen.

Das erfindungsgemäße Hydraulikaggregat ist bevorzugt zur Durchführung des erfindungsgemäßen Verfahrens und/oder einer bevorzugten Ausführungsform des erfindungsgemäßen Verfahrens ausgebildet. Das erfindungsgemäße

Verfahrenren ist bevorzugt zur Durchführung mittels eines erfindungsgemäßen Hydraulikaggregats und/oder einer bevorzugten Ausführungsform eines erfindungsgemäßen Hydraulikaggregats ausgestaltet.

Das Hydraulikaggregat ist zur Druckversorgung eines hydraulischen Lenksystems ausgebildet und weist zumindest zwei Hydraulikzylinder und zumindest eine Hydraulikpumpe auf.

Wesentlich ist, dass die Hydraulikzylinder als Differentialzylinder zusammenwirkend ausgebildet sind, indem ein Ringraum des ersten Hydraulikzylinders über zumindest eine Hydraulikleitung mit einem Ringraum des zweiten Hydraulikzylinders verbunden ist und ein Kolbenraum des ersten Hydraulikzylinders über zumindest eine Hydraulikleitung mit einem Kolbenraum des zweiten Hydraulikzylinders verbunden ist und zumindest in einer Hydraulikleitung zwischen den beiden Ringräumen oder in einer Hydraulikleitung zwischen den beiden Kolbenräumen eine Hydraulikpumpe angeordnet ist.

Die Hydraulikzylinder sind also zueinander gegenläufig angeordnet, so dass eine Expansion des einen Hydraulikzylinders, zum Beispiel bei einer Lenkbewegung eines Fahrzeugs, eine Kompression des anderen Hydraulikzylinders zur Folge hat. Dies betrifft ebenso die jeweils gleichartigen Räume: Dehnt sich die Ringraumseite des einen Hydraulikzylinders aus, wird die Ringraumseite des anderen Hydraulikzylinders komprimiert. Gleichzeitig wird die Kolbenseite des einen Hydraulikzylinders komprimiert während die Kolbenseite des anderen Hydraulikzylinders sich ausdehnt.

Die Erfindung unterscheidet sich in wesentlichen Aspekten von den vorbekannten Lösungen aus dem Stand der Technik: Die Ansteuerung des Hydraulikaggregats erfolgt nicht pro Hydraulikzylinder, vielmehr sind jeweils zwei gleichartige Räume der beiden Hydraulikzylinder über Hydraulikleitungen verbunden, d. h. dass die Ringraumseite des einen Hydraulikzylinders mit der Ringraumseite des anderen Hydraulikzylinders über eine Hydraulikleitung verbunden ist und so Hydraulikflüssigkeit zwischen diesen beiden Räumen ausgetauscht werden kann. Gleichzeitig ist die Kolbenseite des einen Hydraulikzylinders mit der Kolbenseite des anderen Hydraulikzylinders über eine Hydraulikleitung verbunden, so dass auch zwischen diesen beiden Räumen Hydraulikflüssigkeit ausgetauscht werden kann.

Bei einer Lenkbewegung sind durch die Volumenänderungen der Räume in den beiden Hydraulikzylindern immer beide Volumenströme in den Hydraulikleitungen zwischen den jeweils gleichartigen Räumen der Hydraulikzylinder am Fließen.

Zusätzlich ist zumindest in beiden Hydraulikleitungen, d. h. zwischen den beiden Ringräumen und zwischen den beiden Kolbenräumen jeweils eine Hydraulikpumpe zum Pumpen von Hydraulikflüssigkeit vorgesehen.

Hierdurch ergibt sich der Vorteil, dass die Druckversorgung richtungsunabhängig auf jeweils gleichgroße Flächen wirkt, da die Druckversorgung jeweils auf die Kolbenflächen und/oder die Ringflächen der Hydraulikzylinder wirkt. Die Druckversorgung kann also hinsichtlich des Energiebedarfs optimal ausgelegt werden. Im Vergleich zu den im Stand der Technik benötigten Motoren, die sowohl im Hinblick auf Drehzahl als auch Drehmoment auf die jeweiligen Extremwerte auszulegen sind, können erfindungsgemäß zielgerichtet kleinere und effizientere Motoren eingesetzt werden. Dies hat unmittelbaren Einfluss auf die Baugröße und gegebenenfalls auch noch auf den Wirkungsgrad des Motors.

Der Begriff Druckversorgung umfasst im Rahmen dieser Beschreibung zumindest eine Hydraulikpumpe und zumindest einen Antriebsmotor für die Hydraulikpumpe. Störungen der Druckversorgung können Hydraulikpumpe oder Antriebsmotor sowie Hydraulikpumpe und Antriebsmotor betreffen.

Erfindungsgemäß sind die Hydraulikzylinder als Differentialzylinder ausgebildet. Vorzugsweise sind die Hydraulikzylinder als identische Differentialzylinder ausgebildet. Differentialzylinder können kompakt ausgestaltet sein, da keine durchgehende Kolbenstange notwendig ist und sind kostengünstig. Darüber hinaus treten bei Differentialzylindern mit den typischerweise eingesetzten Anbindungselementen in Lenkungsapplikationen keine Querkräfte auf. Diese Art von Zylindern kann des Weiteren in einfacher Art und Weise mit einem integrierten Messsystem ausgestattet sein.

Durch die Erfindung können alle Vorteile von Differentialzylindern genutzt werden während gleichzeitig auch die eigentlich bei Gleichgangzylindern üblichen Vorteile der gleichgroßen wirksamen Flächen und damit der Energieeffizienz vorhanden sind.

Erfindungsgemäß umfasst das Hydraulikaggregat eine zweite Hydraulikpumpe. Die beiden Hydraulikpumpen sind jeweils in den Hydraulikleitungen zwischen den jeweils gleichartigen Räumen der Hydraulikzylinder angeordnet. Es ist also eine Hydraulikpumpe in der Hydraulikleitung zwischen den beiden Ringräumen und eine Hydraulikpumpe in der Hydraulikleitung zwischen den beiden Kolbenräumen angeordnet. Hierdurch ergibt sich der Vorteil, dass sich die Druckversorgung auf die beiden Hydraulikleitungen verteilen lässt und dadurch auch alle möglichen Angriffsflächen, d. h. sowohl einerseits die Kolbenflächen als auch andererseits die Ringflächen der beiden Zylinder genutzt werden können. Durch die Redundanz der zwei unabhängigen Druckversorgungen wird eine erhöhte Sicherheit erreicht, die es erlaubt, bei Ausfall einer der beiden Druckversorgungen die grundsätzliche Lenkfunktion (jedoch mit reduzierter Performance) aufrecht zu erhalten, da auch bei einem Ausfall oder einer Störung einer der beiden Hydraulikpumpen bzw. Druckversorgungen durch die verbleibende Hydraulikpumpe bzw. Druckversorgung eine Basis-Druckversorgung gewährleistet ist.

In einer bevorzugten Ausführungsform der Erfindung umfasst das Hydraulikaggregat zumindest eine Ventilanordnung. Die Ventilanordnung ist in Wirkverbindung mit der Hydraulikleitung angeordnet, die die Hydraulikpumpe umfasst. Dabei umfasst die Ventilanordnung zumindest ein Ventil, welches in der offenen Stellung den Durchfluss der Hydraulikflüssigkeit ermöglicht und in der geschlossenen Stellung den Durchfluss der Hydraulikflüssigkeit blockiert, sowie Hydraulikleitungen, die zu dem Ventil hinführen und von dem Ventil wegführen.

Vorzugsweise kann durch Integration einer Nachsaugmöglichkeit im Hydraulickreis ein geringer Ölverlust kompensiert werden. Die Nachsaugmöglichkeit ermöglicht ein Nachsaugen von Hydraulikflüssigkeit, sofern in einem der beiden verbundenen Ölräume ein Ölverlust (Leckage) auftreten sollte, beispielsweise Ölverlust über die Kolbendichtungen. Mit der Korrekturmöglichkeit der Nachsaugmöglichkeit können die Zylinder als redundante Systeme angesehen werden.

Vorzugsweise ist die Nachsaugmöglichkeit als eine weitere zusätzliche Funktion der Ventilanordnung realisiert. Die Nachsaugmöglichkeit, kann wie aus dem Stand der Technik bekannt ausgebildet sein.

Die Ventilanordnung ist so angeordnet und ausgebildet, dass die Hydraulikflüssigkeit über die Ventilanordnung fließen kann und so die Hydraulikpumpe umgehen kann. Die Ventilanordnung stellt also einen alternativen Weg für die Hydraulikflüssigkeit dar. In einer ersten geschlossenen Stellung des Ventils der Ventilanordnung ist der alternative Weg über die Ventilanordnung geschlossen und die Hydraulikflüssigkeit fließt über die Hydraulikpumpe, wobei dann die Möglichkeit besteht, eine Nachsaugfunktionalität mit zu integrieren. In einer zweiten offenen Stellung des Ventils der Ventilanordnung ist der Weg für die Hydraulikflüssigkeit über die Ventilanordnung offen und die Hydraulikflüssigkeit fließt über die Ventilanordnung.

In diesem Fall kann die Hydraulikflüssigkeit frei zwischen den beiden gleichartigen Räumen der Hydraulikzylinder hin und her fließen. Dieser Teil des Hydraulikaggregats stellt dann keinen Widerstand und auch keine Unterstützung mehr für die Lenkung dar. Der zweite Teil des Hydraulikaggregats arbeitet in diesem Fall alleine. Ist in dem zweiten Teil des Hydraulikaggregats keine Hydraulikpumpe vorgesehen, ist auch hier ein freier Austausch der Hydraulikflüssigkeit zwischen den beiden gleichartigen Räumen der Hydraulikzylinder möglich. In diesem Fall der einflusslosen Abschaltung des Hydraulikaggregats ist die Lenkung frei.

Vorzugsweise umfasst das Hydraulikaggregat zumindest zwei Ventilanordnungen, wobei eine Ventilanordnung in der Hydraulikleitung zwischen den beiden Ringräumen und eine Ventilanordnung in der Hydraulikleitung zwischen den beiden Kolbenräumen angeordnet ist. Bei einem Ausfall der Systeme kann also über die beiden Ventilanordnungen eine Freischaltung erfolgen, so dass die Lenkung auch im Störfall nicht blockiert oder gegenlenkt.

Die zuvor beschriebene Aufgabe der Erfindung ist ebenso gelöst durch ein Verfahren gemäß Anspruch 6.

Das erfindungsgemäße Verfahren ist zum Betrieb eines Hydraulikaggregats zur Druckversorgung eines hydraulischen Lenksystems ausgelegt und wird mit zumindest zwei Hydraulikzylindern, die als Differentialzylinder ausgebildet sind und zumindest zwei Hydraulikpumpen durchgeführt.

Es ist wesentlich, dass zwei gleichartige Räume der Hydraulikzylinder über Hydraulikleitungen verbunden sind und bei einer Lenkbewegung Hydraulikflüssigkeit zwischen den gleichartigen Räumen fließt, wobei in beiden Hydraulikleitungen die Hydraulikflüssigkeit jeweils mittels einer Hydraulikpumpe gepumpt wird. Zwei gleichartige Räume der Hydraulikzylinder bedeutet im Rahmen dieser Beschreibung, dass die Hydraulikzylinder jeweils einen Ringraum und einen Kolbenraum umfassen. Die beiden Ringräume der beiden Hydraulikzylinder sind also gleichartig. Ebenso sind die beiden Kolbenräume der beiden Hydraulikzylinder gleichartig. Es besteht also eine Verbindung zwischen dem Ringraum des einen Hydraulikzylinders und dem Ringraum des anderen Hydraulikzylinders sowie eine Verbindung zwischen dem Kolbenraum des einen Hydraulikzylinders und dem Kolbenraum des anderen Hydraulikzylinders. Die Verbindung erfolgt über Hydraulikleitungen, die sowohl durchgehend als auch mehrteilig sein können.

Das erfindungsgemäße Verfahren weist ebenfalls die vorgenannten Vorteile des erfindungsgemäßen Hydraulikaggregats auf.

Eine bevorzugte Ausgestaltung des erfindungsgemäßen Verfahrens sieht vor, dass im Falle einer Fehlfunktion die Hydraulikpumpe in der Hydraulikleitung mittels einer Ventilanordnung umgangen wird. Die Ventilanordnung umfasst ein Ventil sowie Hydraulikleitungen. Dabei kann das Ventil abhängig von der Ventilstellung offen oder geschlossen einen Durchfluss der Hydraulikflüssigkeit ermöglichen oder blockieren. Im Störfall kann die Ventilstellung auf offen gestellt werden, so dass ein Durchfluss möglich ist und die Hydraulikflüssigkeit über die Ventilanordnung zwischen den gleichartigen Räumen der Hydraulikzylinder fließen kann. Dadurch wird die fehlerbehaftete Druckversorgung umgangen und es kommt nicht zu einer Blockade oder Gegenlenkung.

Die erfindungsgemäße Aufgabe wird weiter gelöst durch ein Lenksystem gemäß Anspruch 8.

Das erfindungsgemäße Lenksystem ist für eine Vorderachse ausgelegt. Das Lenksystem umfasst zumindest zwei Lenkhebel, zumindest zwei Hydraulikzylinder, die als Differentialzylinder ausgebildet sind und zumindest eine Hydraulikpumpe. Erfindungsgemäß ist das Lenksystem für eine gelenkte zweite Vorderachse ausgelegt.

Wesentlich ist, dass die zwei Hydraulikzylinder mit jeweils der gleichen Zylinderseite an der zweiten Vorderachse und jeweils mit der anderen Zylinderseite mit jeweils einem der beiden Lenkhebel verbunden sind. Mit anderen Worten sind die Hydraulikzylinder beide entweder ringraumseitig mit dem jeweiligen Lenkhebel und kolbenseitig mit der zweiten Vorderachse oder umgekehrt ringraumseitig mit der zweiten Vorderachse und kolbenseitig mit dem jeweiligen Lenkhebel verbunden. Weiter ist der Ringraum des ersten Hydraulikzylinders über zumindest eine Hydraulikleitung mit dem Ringraum des zweiten Hydraulikzylinders verbunden und der Kolbenraum des ersten Hydraulikzylinders über zumindest eine Hydraulikleitung mit dem Kolbenraum des zweiten Hydraulikzylinders verbunden, so dass die jeweils gleichartigen Räume der zwei Hydraulikzinder miteinander über Hydraulikleitungen verbunden sind. In einer der Hydraulikleitungen zwischen den beiden Ringräumen und in einer Hydraulikleitung zwischen den beiden Kolbenräumen ist jeweils eine Hydraulikpumpe angeordnet.

Erfindungsgemäß ist in den beiden Hydraulikleitungen jeweils eine Hydraulikpumpe angeordnet. Es sind also jeweils die zwei gleichartigen Räume der Hydraulikzylinder über Hydraulikleitungen verbunden, wobei jeweils zwischen den gleichartigen Räumen in der Hydraulikleitung eine Hydraulikpumpe vorgesehen ist. Vorzugsweise weist die Lenkung für die betroffene Achse eine Kopplung über eine verbindende Spurstange auf. Über die verbindende Spurstange kann im Fall einer Störung die Kraft von der Seite mit der funktionierenden Druckversorgung an das andere Rad übertragen werden.

Das erfindungsgemäße Lenksystem weist ebenfalls die vorgenannten Vorteile des erfindungsgemäßen Hydraulikaggregats sowie des erfindungsgemäßen Verfahrens auf.

Das erfindungsgemäße Hydraulikaggregat ist insbesondere für die Druckversorgung in einem hydraulischen Lenksystem für Nutzkraftfahrzeuge, Bau-, Land-, oder Transportmaschinen geeignet. Dabei trägt das erfindungsgemäße Hydraulikaggregat insbesondere zur Erhöhung der Sicherheit im Störfall bei. Insbesondere beim Einsatz für das Lenksystem einer gelenkten zweiten Vorderachse kann mit dem erfindungsgemäßen Hydraulikaggregat sicher und mehrstufig auf Störfälle reagiert werden. Der Einsatz ist jedoch auch für den Einsatz der ersten gelenkten Vorderachse möglich, sofern die Fahrzeugarchitektur eine vollständige Redundanz ermöglicht (unabhängige Stromversorgungen und unabhängige ECUs). Für Fahrzeuge mit einer bauartbedingten Höchstgeschwindigkeit <80 km/h kann das erfindungsgemäße Lenksystem ebenfalls als steer-by-wire Lösung eingesetzt werden.

Weitere bevorzugte Merkmale und Ausführungsformen der Erfindung werden im Folgenden anhand von Ausführungsbeispielen und den Figuren erläutert. Dabei zeigt:
- Figur 1: eine schematische Darstellung eines Ausführungsbeispiels eines nicht erfindungsgemäßen Hydraulikaggregats;
- Figur 2: eine schematische Darstellung eines ersten Ausführungsbeispiels eines erfindungsgemäßen Hydraulikaggregats;
- Figur 3: eine schematische Darstellung eines zweiten Ausführungsbeispiels eines erfindungsgemäßen Hydraulikaggregates;
- Figur 4: eine schematische Darstellung eines ersten Ausführungsbeispiels eines erfindungsgemäßen Lenksystems für eine gelenkte zweite Vorderachse.

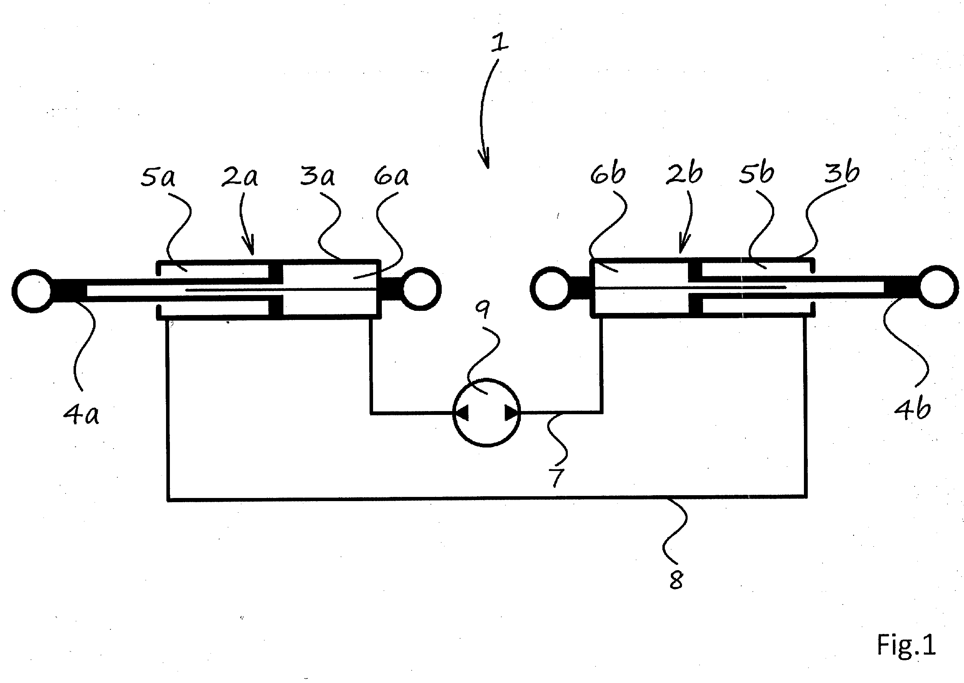

In den Figuren 1 bis 4 bezeichnen gleiche Bezugszeichen gleiche oder gleichwirkende Elemente.

Figur 1 zeigt eine schematische Darstellung eines Ausführungsbeispiels eines nicht erfindungsgemäßen Hydraulikaggregats 1.

Das Hydraulikaggregat 1 umfasst zwei Hydraulikzylinder 2a, 2b. Die Hydraulikzylinder 2a, 2b sind als Differentialzylinder ausgebildet, vorliegend als identische Differentialzylinder.

Die beiden Hydraulikzylinder 2a, 2b weisen jeweils ein Zylinderrohr 3a, 3b sowie einen Kolben 4a, 4b auf. Dadurch bilden sich in den Hydraulikzylindern jeweils zwei Volumina: Die Kolbenseite 5a, 5b und die Ringraumseite 6a, 6b. Die beiden Hydraulikzylinder sind über zwei Hydraulikleitungen 7, 8 miteinander verbunden. Die Hydraulikleitungen 7, 8 verbinden jeweils zwei gleichartige Räume 5a, 5b bzw. 6a, 6b der beiden Hydraulikzylinder 2a, 2b.

Der Kolbenraum 5a des ersten Hydraulikzylinders 2a ist über die Hydraulikleitung 8 mit dem Kolbenraum 5b des zweiten Hydraulikzylinders 2b verbunden.

Der Ringraum 6a des ersten Hydraulikzylinders 2a ist über die Hydraulikleitung 7 mit dem Ringraum 6b des Hydraulikzylinders 2b verbunden.

In der Hydraulikleitung 7 ist eine Hydraulikpumpe 9 angeordnet. Die Hydraulikpumpe 9 ist Teil der Druckversorgung, welche die Hydraulikpumpe und einen Antriebsmotor (nicht dargestellt) umfasst. Der Antriebsmotor ist vorliegend als Elektromotor ausgebildet.

Bei einer Bewegung der Kolben in den Hydraulikzylindern verändern sich die Volumina 5a, 6a, 5b, 6b. Der Kolben 4a des Hydraulikzylinders 2a wird beispielsweise in den Zylinder 3a hineingeschoben. Der Ringraum 6a verkleinert sich und der Kolbenraum 5a vergrößert sich. Gleichzeitig wird der Kolben 4b aus dem Zylinder 3b hinausgeschoben. Der Ringraum 6b vergrößert sich und der Kolbenraum 5b verkleinert sich. Bei dieser Bewegung fließt Hydraulikflüssigkeit von dem Ringraum 6a über die Hydraulikleitung 7 und die Pumpe 9 in den Ringraum 6b. Da die beiden Hydraulikzylinder identisch ausgebildet sind, wirkt der Druck der Hydraulikflüssigkeit jeweils auf die identische Ringfläche. Durch die Bereitstellung der hydraulischen Leistung (Druck sowie Volumenstrom) mittels der Hydraulikpumpe 9 wird die Bewegung der Hydraulikzylinder erzeugt.

Gleichzeitig vergrößert sich das Volumen des Kolbenraums 5a und der Kolben des zweiten Hydraulikzylinders 2b wird aus dem Zylinder 3b hinausgeschoben und es verkleinert sich das Volumen des Kolbenraums 5b. Die Hydraulikflüssigkeit fließt von dem Kolbenraum 5b über die Hydraulikleitung 8 in den Kolbenraum 5a.

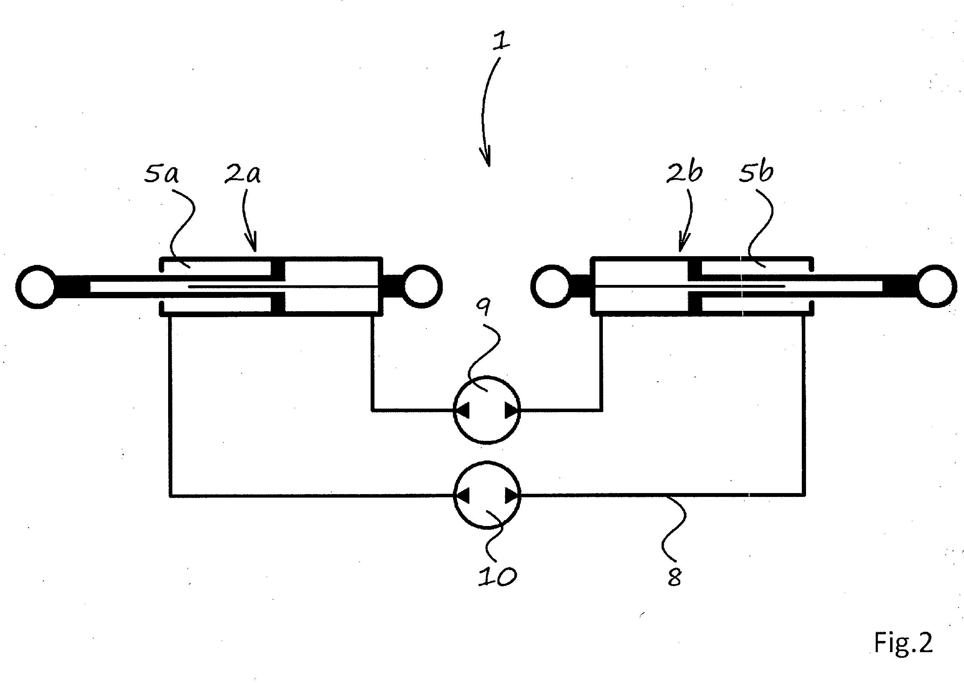

In Figur 2 ist eine schematische Darstellung einer ersten Ausführungsform der Erfindung gezeigt.

Um unnötige Wiederholungen zu vermeiden, soll im Folgenden lediglich auf die Unterschiede zwischen den Figuren eingegangen werden.

Zusätzlich zu den Komponenten aus Figur 1 umfasst das in Figur 2 dargestellte Hydraulikaggregat eine zweite Hydraulikpumpe 10. Diese zweite Hydraulikpumpe ist in der Hydraulikleitung 8 zwischen dem Kolbenraum 5a des einen Hydraulikzylinders und dem Kolbenraum 5b des zweiten Hydraulikzylinders angeordnet. Die Hydraulikpumpe 10 ist Teil einer zweiten Druckversorgung, welche die Hydraulikpumpe 10 und einen Antriebsmotor (nicht dargestellt) umfasst. Der Antriebsmotor ist vorliegend als Elektromotor ausgebildet.

Mit der zweiten Hydraulikpumpe 10 kann der hydraulische Druck über eine entsprechende Anpassung des Pumpenfördervolumens so angepasst werden, dass bei identischer hydraulischer Leistung exakt das Verhältnis der Flächenunterschiede zwischen Ring- und Kolbenfläche in der Pumpe abgebildet wird und so eine Addition der hydraulischen Leistung ermöglicht wird bei optimaler Ausnutzung sowohl der Hydraulikpumpe als auch des Antriebsmotors.

Bei einem Ausfall oder einer Störung einer der beiden Hydraulikpumpen 9,10 (Druckversorgungen) ist durch die verbleibende Hydraulikpumpe eine Basis-Druckversorgung gewährleistet. Dies ermöglicht auch im Störfall eine Mindestfunktionalität der Lenkung.

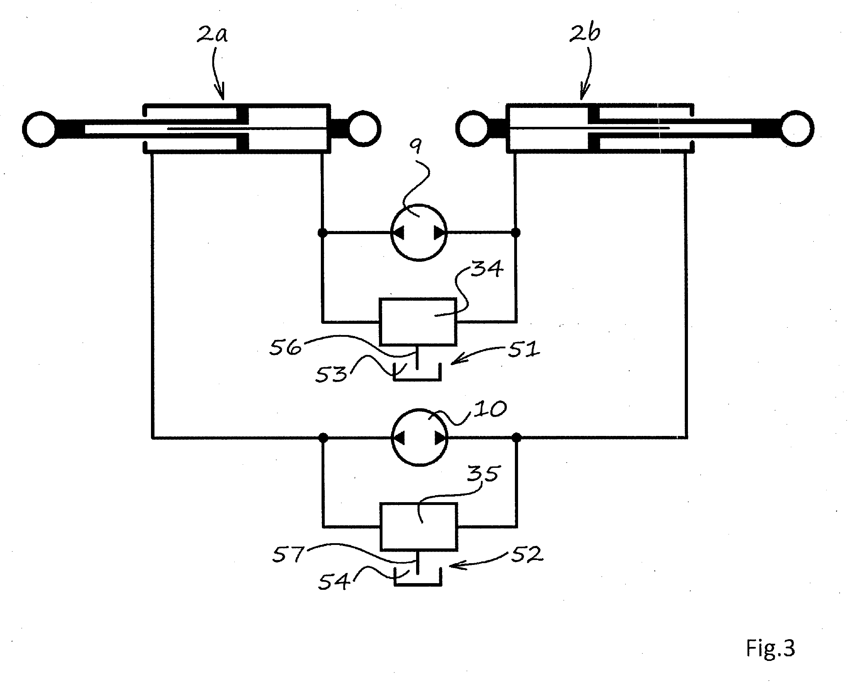

In Figur 3 ist eine schematische Darstellung einer zweiten Ausführungsform der Erfindung gezeigt.

In Figur 3 ist zusätzlich für jede der beiden Druckversorgungen mit den Hydraulikpumpen 9, 10 eine Nachsaugfunktionalität 51, 52 vorgesehen. Bei einer Leckage (intern oder extern) im Hydraulikkreis kann der Verlust von Hydraulikflüssigkeit über ein Reservoir 53, 54 der Nachsaugfunktionalität 51, 52 kompensiert werden.

Die Nachsaugfunktionalitäten 51, 52 umfassen vorliegend jeweils ein Reservoir 53, 54 für die Hydraulikflüssigkeit und sind vorliegend als Teil der Ventilanordnungen 34, 35 ausgebildet. Die Reservoire 53, 54 für die Hydraulikflüssigkeit und die jeweils zugehörige Ventilanordnungen 34, 35 sind über Hydraulikleitungen 56, 57 verbunden.

Beispielsweise kann mit der Nachsaugfunktionalität 51, 52 ein Ölverlust über die Kolbendichtungen kompensiert werden und so ein hydraulisches Weichwerden des Hydraulikzylinders vermieden werden.

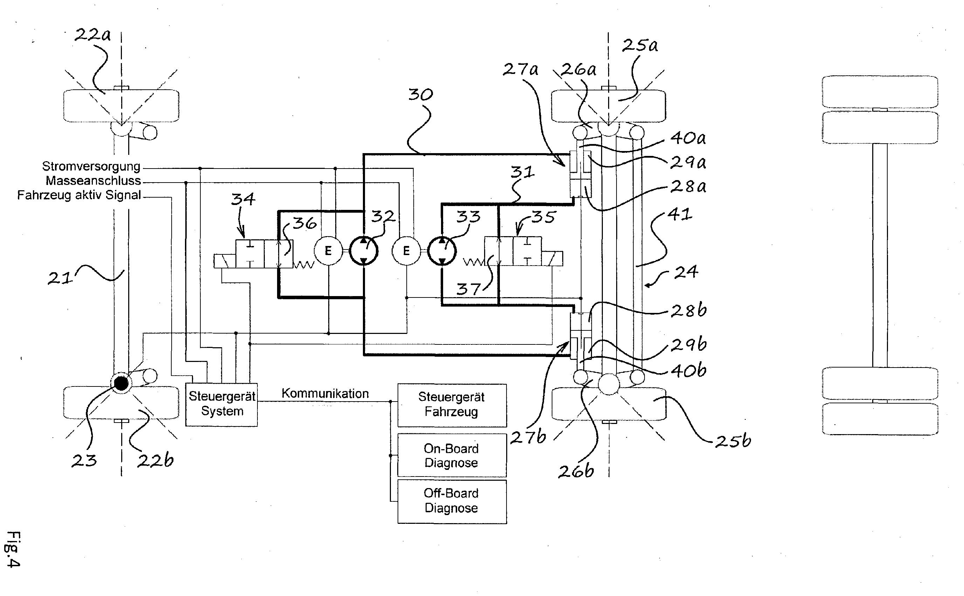

Figur 4 zeigt eine schematische Darstellung einer Ausführungsform eines erfindungsgemäßen Lenksystems für eine Lenkung für eine gelenkte zweite Vorderachse 24.

In Figur 4 ist die erste gelenkte Vorderachse 21 mit den Rädern 22a, 22b dargestellt. Die erste Vorderachse wird über die Lenkung 23 gelenkt. Diese kann als herkömmliches Lenksystem mit mechanischer Kopplung als Fail-Safe-Modus ausgeführt sein. Diese erste gelenkte Vorderachse ist in diesem Fall unabhängig von der zweiten gelenkten Vorderachse und hat dementsprechend keinerlei mechanische Kopplung.

Die zweite Vorderachse 24 verbindet die Räder 25a und 25b. An den Rädern 25a und 25b sind Lenkhebel 26a, 26b vorgesehen. Diese Lenkhebel 26a, 26b werden über Hydraulikzylinder 27a, 27b bewegt. Die Hydraulikzylinder 27a, 27b sind wie zu Figur 1 beschrieben ausgebildet. Vorliegend sind jeweils die Kolben 40a, 40b der Hydraulikzylinder 27a, 27b mit den Lenkhebeln 26a, 26b verbunden.

Die Lenkung umfasst weiter eine verbindende Spurstange 41. Die verbindende Spurstange 41 verbindet die Räder 25a, 25b über die Lenkhebel 26a, 26b als starre Verbindung. Dadurch ergibt sich eine kraftschlüssige Wirkverbindung zwischen den beiden Rädern 26a, 26b.

Vorliegend sind die jeweils gleichartigen Räume der beiden Hydraulikzylinder 27a, 27b, d. h. Ringraum 28a mit Ringraum 28b und Kolbenraum 29a mit Kolbenraum 29b über Hydraulikleitungen 30, 31 verbunden.

Im Verlauf der Hydraulikleitungen 30, 31 ist jeweils eine Pumpe 32, 33 vorgesehen.

Zur Umgehung der Pumpe 32, 33 im Störfall ist in beiden Hydraulikleitungen 30, 31 eine Ventilanordnung 34, 35 vorgesehen. Die Ventilanordnung umfasst Hydraulikleitungen, die an die Hydraulikleitungen 30, 31 angeschlossen sind sowie jeweils ein Ventil 36, 37. Die Hydraulikpumpen 32, 33 und die Ventilanordnungen 34, 35 stellen also alternative Wege dar, die die Hydraulikflüssigkeit nehmen kann abhängig von der Stellung des Ventils 36, 37.

Versperrt das Ventil 36, 37 den Durchfluss für die Hydraulikflüssigkeit, fließt die Hydraulikflüssigkeit über die Hydraulikpumpe. Ist das Ventil offen, d. h. ein Durchfluss der Hydraulikflüssigkeit ist möglich, fließt die Hydraulikflüssigkeit bevorzugt über die Ventilanordnung und umgeht somit die Hydraulikpumpe.

Im Störfall der Hydraulikpumpen kann also die Ventilstellung umgeschaltet werden, so dass die Hydraulikflüssigkeit über die Ventilanordnung frei fließen kann und trotz einer Fehlfunktion der Hydraulikpumpe keine Blockierung oder Gegenlenkung erfolgt.

Da das Hydraulikaggregat redundant mit zwei Hydraulikpumpen aufgebaut ist, kann bei dem Ausfall einer Hydraulikpumpe diese Hydraulikpumpe abgeschaltet, d. h. über die Ventilanordnung umgangen werden, und die verbleibende Hydraulikpumpe kann weiter die Lenkung unterstützen. Über die verbindende Spurstange 41 wird in diesem Fall die Kraft von der Seite mit der funktionierenden Hydraulikpumpe (und damit der funktionierenden Druckversorgung) an das andere Rad übertragen.

Ist also beispielsweise die Hydraulikpumpe 32 ausgefallen, wird das Ventil 36 auf offen gestellt. Die Hydraulikflüssigkeit fließt nicht mehr über die Hydraulikpumpe 32 zwischen Kolbenraum 29a und 29b der beiden Hydraulikzylinder 27a, 27b, sondern über die Ventilanordnung 34. Die Hydraulikflüssigkeit fließt frei, das heißt ohne eine Blockierung aber auch ohne eine zusätzliche Druckversorgung.

Die verbleibende Hydraulikpumpe 33 ermöglicht die Druckversorgung und damit die Verstärkung der Lenkbewegung in eine Richtung auf eines der Räder 25a. Diese Bewegung wird über die verbindende Spurstange 41 auch auf das Rad 25b übertragen. Dies ermöglicht auch im Störfall eine Mindestfunktionalität der Lenkung.

Vorliegend ist die Standardstellung der Ventile geschlossen, d. h. es kann kein Durchfluss der Hydraulikflüssigkeit erfolgen, sondern die Hydraulikflüssigkeit muss über die Hydraulikpumpen fließen.

Lediglich im Störfall wird die Ventilstellung auf offen umgestellt, so dass die Hydraulikflüssigkeit durch das Ventil fließen kann. In dem Zustand dieser einflusslosen Abschaltung ist die zweite Vorderachse frei und folgt der Lenkung der ersten Achse.

## Patentansprüche

1. Hydraulikaggregat (1) zur Druckversorgung eines hydraulischen Lenksystems mit zumindest zwei Hydraulikzylindern (2a, 2b, 27a, 27b) und zumindest einer Hydraulikpumpe (9, 10, 32, 33), wobei
die Hydraulikzylinder (2a, 2b, 27a, 27b) als Differentialzylinder zusammenwirkend ausgebildet sind, indem ein Ringraum (6a, 6b, 28a, 28b) des ersten Hydraulikzylinders (2a, 2b, 27a, 27b) über zumindest eine Hydraulikleitung mit einem Ringraum (6a, 6b, 28a, 28b) des zweiten Hydraulikzylinders (2a, 2b, 27a, 27b) verbunden ist und ein Kolbenraum (5a, 5b, 29a, 29b) des ersten Hydraulikzylinders (2a, 2b, 27a, 27b) über zumindest eine Hydraulikleitung mit einem Kolbenraum (5a, 5b, 29a, 29b) des zweiten Hydraulikzylinders (2a, 2b, 27a, 27b) verbunden ist und zumindest in einer Hydraulikleitung (7, 8, 30, 31) zwischen den beiden Ringräumen (6a, 6b, 28a, 28b) oder in einer Hydraulikleitung zwischen den beiden Kolbenräumen (5a, 5b, 29a, 29b) eine Hydraulikpumpe (9, 10, 32, 33) angeordnet ist,
**dadurch gekennzeichnet,**
**dass** das Hydraulikaggregat zumindest eine zweite Hydraulikpumpe (9, 10, 32, 33) umfasst, wobei eine Hydraulikpumpe (9, 10, 32, 33) in der Hydraulikleitung (7, 8, 30, 31) zwischen den beiden Ringräumen (6a, 6b, 28a, 28b) und eine Hydraulikpumpe (9, 10, 32, 33) in der Hydraulikleitung (7, 8, 30, 31) zwischen den beiden Kolbenräumen (5a, 5b, 29a, 29b) angeordnet ist.

2. Hydraulikaggregat nach einem der vorangegangenen Ansprüche,
**dadurch gekennzeichnet,**
**dass** die Hydraulikzylinder (2a, 2b, 27a, 27b) als identische Differentialzylinder ausgebildet sind.

3. Hydraulikaggregat nach einem der vorangegangenen Ansprüche,
**dadurch gekennzeichnet,**
**dass** das Hydraulikaggregat zumindest eine Ventilanordnung (34, 35) umfasst, welche Ventilanordnung (34, 35) in der Hydraulikleitung vorgesehen ist, die die Hydraulikpumpe (9, 10, 32, 33) umfasst, und so angeordnet ist, dass bei einer ersten geschlossenen Stellung des Ventils (36, 37) der Ventilanordnung (34, 35) die Hydraulikflüssigkeit über die Hydraulikpumpe (9, 10, 32, 33) fließt und bei einer zweiten geöffneten Stellung des Ventils (36, 37) der Ventilanordnung (34, 35) die Hydraulikflüssigkeit über die Ventilanordnung (34, 35) fließt.

4. Hydraulikaggregat nach Anspruch 3,
**dadurch gekennzeichnet,**
**dass** das Hydraulikaggregat eine zweite Ventilanordnung (34, 35) umfasst, wobei eine Ventilanordnung (34, 35) in der Hydraulikleitung (7, 8, 30, 31) zwischen den beiden Ringräumen und eine Ventilanordnung (34, 35) in der Hydraulikleitung (7, 8, 30, 31) zwischen den beiden Kolbenräumen angeordnet ist.

5. Hydraulikaggregat nach einem der vorangegangenen Ansprüche,
**dadurch gekennzeichnet,**
**dass** das Hydraulikaggregat zumindest eine Nachsaugfunktionalität umfasst, vorzugsweise, dass die Ventilanordnung (34, 35) eine Nachsaugfunktionalität (51, 52) umfasst, welche das Nachsaugen von Hydraulikflüssigkeit im Falle einer Leckage ermöglicht.

6. Verfahren zum Betrieb eines Hydraulikaggregats zur Druckversorgung eines hydraulischen Lenksystems mit zumindest zwei Hydraulikzylindern (27a, 27b) und zumindest zwei Hydraulikpumpen (9, 10, 32, 33),
**dadurch gekennzeichnet,**
**dass** jeweils zwei gleichartige Räume der Hydraulikzylinder (27a, 27b), die als Differentialzylinder ausgeführt sind, über Hydraulikleitungen (7, 8, 30, 31) verbunden sind und bei einer Lenkbewegung Hydraulikflüssigkeit zwischen den gleichartigen Räumen fließt, wobei in beiden Hydraulikleitungen (7, 8, 30, 31) die Hydraulikflüssigkeit jeweils mittels einer der Hydraulikpumpen (9, 10, 32, 33) gepumpt wird.

7. Verfahren nach Anspruch 6,
**dadurch gekennzeichnet,**
**dass** im Fall einer Fehlfunktion die Hydraulikpumpe (9, 10, 32, 33) in der Hydraulikleitung (7, 8, 30, 31) mittels einer Ventilanordnung (34, 35) umgangen wird, sodass die Hydraulikflüssigkeit über die Ventilanordnung (34, 35) zwischen den gleichartigen Räumen der Hydraulikzylinder fließen kann.

8. Lenksystem für eine Achse, mit zumindest zwei Lenkhebeln, zumindest zwei Hydraulikzylindern und zumindest einer Hydraulikpumpe (9, 10, 32, 33),
**dadurch gekennzeichnet,**
**dass** die zwei Hydraulikzylinder (27a, 27b) als Differentialzylinder ausgeführt sind und mit jeweils der gleichen Zylinderseite an einer zweiten Vorderachse und jeweils mit der anderen Zylinderseite mit jeweils einem der beiden Lenkhebel verbunden sind und dass ein Ringraum (6a, 6b, 28a, 28b) des ersten Hydraulikzylinders (27a, 27b) über zumindest eine Hydraulikleitung (7, 8, 30, 31) mit einem Ringraum (6a, 6b, 28a, 28b) des zweiten Hydraulikzylinders (27a, 27b) verbunden ist und ein Kolbenraum (5a, 5b, 29a, 29b) des ersten Hydraulikzylinders (27a, 27b) über zumindest eine Hydraulikleitung (7, 8, 30, 31) mit einem Kolbenraum (5a, 5b, 29a, 29b) des zweiten Hydraulikzylinders (27a, 27b) verbunden ist und zumindest in einer Hydraulikleitung zwischen den beiden Ringräumen (6a, 6b, 28a, 28b) und in einer Hydraulikleitung zwischen den beiden Kolbenräumen (5a, 5b, 29a, 29b) jeweils eine Hydraulikpumpe (9, 10, 32, 33) angeordnet ist, wobei die Hydraulikzylinder (27a, 27b), die Hydraulikpumpen (9, 10, 32, 33) und die Hydraulikleitungen (7, 8, 30, 31) Teil eines Hydraulikaggregats nach einem der Ansprüche 1 bis 5 sind.

## Claims

1. Hydraulic unit (1) for supplying pressure to a hydraulic steering system having at least two hydraulic cylinders (2a, 2b, 27a, 27b) and at least one hydraulic pump (9, 10, 32, 33), wherein
the hydraulic cylinders (2a, 2b, 27a, 27b) are configured to co-operate as differential cylinders, this being effected by an annular chamber (6a, 6b, 28a, 28b) of the first hydraulic cylinder (2a, 2b, 27a, 27b) being connected via at least one hydraulic line to an annular chamber (6a, 6b, 28a, 28b) of the second hydraulic cylinder (2a, 2b, 27a, 27b) and by a piston chamber (5a, 5b, 29a, 29b) of the first hydraulic cylinder (2a, 2b, 27a, 27b) being connected via at least one hydraulic line to a piston chamber (5a, 5b, 29a, 29b) of the second hydraulic cylinder (2a, 2b, 27a, 27b) and by a hydraulic pump (9, 10, 32, 33) being arranged at least in a hydraulic line (7, 8, 30, 31) between the two annular chambers (6a, 6b, 28a, 28b) or in a hydraulic line between the two piston chambers (5a, 5b, 29a, 29b),
**characterised in that**
the hydraulic unit comprises at least one second hydraulic pump (9, 10, 32, 33), a hydraulic pump (9, 10, 32, 33) being arranged in the hydraulic line (7, 8, 30, 31) between the two annular chambers (6a, 6b, 28a, 28b) and a hydraulic pump (9, 10, 32, 33) being arranged in the hydraulic line (7, 8, 30, 31) between the two piston chambers (5a, 5b, 29a, 29b).

2. Hydraulic unit according to any one of the preceding claims,
**characterised in that**
the hydraulic cylinders (2a, 2b, 27a, 27b) are configured as identical differential cylinders.

3. Hydraulic unit according to either one of the preceding claims,
**characterised in that**
the hydraulic unit comprises at least one valve arrangement (34, 35), which valve arrangement (34, 35) is provided in the hydraulic line comprising the hydraulic pump (9, 10, 32, 33) and is arranged so that, in a first closed position of the valve (36, 37) of the valve arrangement (34, 35), the hydraulic fluid flows via the hydraulic pump (9, 10, 32, 33) and, in a second opened position of the valve (36, 37) of the valve arrangement (34, 35), the hydraulic fluid flows via the valve arrangement (34, 35).

4. Hydraulic unit according to claim 3,
**characterised in that**
the hydraulic unit comprises a second valve arrangement (34, 35), a valve arrangement (34, 35) being arranged in the hydraulic line (7, 8, 30, 31) between the two annular chambers and a valve arrangement (34, 35) being arranged in the hydraulic line (7, 8, 30, 31) between the two piston chambers.

5. Hydraulic unit according to any one of the preceding claims,
**characterised in that**
the hydraulic unit comprises at least one replenishment capability; preferably, the valve arrangement (34, 35) comprises a replenishment capability (51, 52) which enables hydraulic fluid to be replenished in the event of a leakage.

6. Method of operating a hydraulic unit for supplying pressure to a hydraulic steering system having at least two hydraulic cylinders (27a, 27b) and at least two hydraulic pumps (9, 10, 32, 33),
**characterised in that**
two equivalent chambers of the hydraulic cylinders (27a, 27b), which are implemented as differential cylinders, are connected via hydraulic lines (7, 8, 30, 31) and, during a steering movement, hydraulic fluid flows between the equivalent chambers, the hydraulic fluid in both hydraulic lines (7, 8, 30, 31) in each case being pumped by means of one of the hydraulic pumps (9, 10, 32, 33).

7. Method according to claim 6,
**characterised in that**
in the event of a malfunction the hydraulic pump (9, 10, 32, 33) in the hydraulic line (7, 8, 30, 31) is bypassed by means of a valve arrangement (34, 35) so that the hydraulic fluid is able to flow between the equivalent chambers of the hydraulic cylinders via the valve arrangement (34, 35).

8. Steering system for an axle, having at least two steering arms, at least two hydraulic cylinders and at least one hydraulic pump (9, 10, 32, 33),
**characterised in that**
the two hydraulic cylinders (27a, 27b) are implemented as differential cylinders and are each connected by the same cylinder side to a second front axle and by the other cylinder side to one of the two steering arms; and an annular chamber (6a, 6b, 28a, 28b) of the first hydraulic cylinder (27a, 27b) is connected via at least one hydraulic line (7, 8, 30, 31) to an annular chamber (6a, 6b, 28a, 28b) of the second hydraulic cylinder (27a, 27b), and a piston chamber (5a, 5b, 29a, 29b) of the first hydraulic cylinder (27a, 27b) is connected via at least one hydraulic line (7, 8, 30, 31) to a piston chamber (5a, 5b, 29a, 29b) of the second hydraulic cylinder (27a, 27b), and a hydraulic pump (9, 10, 32, 33) is arranged at least in a hydraulic line between the two annular chambers (6a, 6b, 28a, 28b) and in a hydraulic line between the two piston chambers (5a, 5b, 29a, 29b), the hydraulic cylinders (27a, 27b), the hydraulic pumps (9, 10, 32, 33) and the hydraulic lines (7, 8, 30, 31) being part of a hydraulic unit according to any one of claims 1 to 5.

## Revendications

1. Groupe hydraulique (1) pour l'alimentation en pression d'un système de direction hydraulique comprenant au moins deux cylindres hydrauliques (2a, 2b, 27a, 27b) et au moins une pompe hydraulique (9, 10, 32, 33), dans lequel
les cylindres hydrauliques (2a, 2b, 27a, 27b) sont agencés pour coopérer en tant que cylindres différentiels du fait qu'un espace annulaire (6a, 6b, 28a, 28b) du premier cylindre hydraulique (2a, 2b, 27a, 27b) est relié par au moins une conduite hydraulique à un espace annulaire (6a, 6b, 28a, 28b) du deuxième cylindre hydraulique (2a, 2b, 27a, 27b) et qu'une chambre de piston (5a, 5b, 29a, 29b) du premier cylindre hydraulique (2a, 2b, 27a, 27b) est reliée par au moins une conduite hydraulique à une chambre de piston (5a, 5b, 29a, 29b) du deuxième cylindre hydraulique (2a, 2b, 27a, 27b) et qu'au moins dans une conduite hydraulique (7, 8, 30, 31) entre les deux chambres annulaires (6a, 6b, 28a, 28b) ou dans une conduite hydraulique entre les deux chambres de piston (5a, 5b, 29a, 29b) est disposée une pompe hydraulique (9, 10, 32, 33),
**caractérisé en ce que**
le groupe hydraulique comprend au moins une deuxième pompe hydraulique (9, 10, 32, 33), dans lequel une pompe hydraulique (9, 10, 32, 33) est disposée dans la conduite hydraulique (7, 8, 30, 31) entre les deux espaces annulaires (6a, 6b, 28a, 28b) et une pompe hydraulique (9, 10, 32, 33) est disposée dans la conduite hydraulique (7, 8, 30, 31) entre les deux chambres de piston (5a, 5b, 29a, 29b).

2. Groupe hydraulique selon l'une des revendications précédentes,
**caractérisé en ce que**
les cylindres hydrauliques (2a, 2b, 27a, 27b) sont agencés en tant que cylindres différentiels identiques.

3. Groupe hydraulique selon l'une des revendications précédentes,
**caractérisé en ce que**
le groupe hydraulique comprend au moins un dispositif de vanne (34, 35), lequel dispositif de vanne (34, 35) est prévu dans la conduite hydraulique qui comprend la pompe hydraulique (9, 10, 32, 33) et est disposé de telle sorte que, dans le cas d'une première position fermée de la vanne (36, 37) du dispositif de vanne (34, 35), le liquide hydraulique coule par la pompe hydraulique (9, 10, 32, 33) et, dans le cas d'une deuxième position ouverte de la vanne (36, 37) du dispositif de vanne (34, 35), le liquide hydraulique coule par le dispositif de vanne (34, 35).

4. Groupe hydraulique selon la revendication 3,
**caractérisé en ce que**
le groupe hydraulique comprend un deuxième dispositif de vanne (34, 35), dans lequel un dispositif de vanne (34, 35) est disposé dans la conduite hydraulique (7, 8, 30,31) entre les deux espaces annulaires et un dispositif de vanne (34, 35) est disposé dans la conduite hydraulique (7, 8, 30, 31) entre les deux chambres de piston.

5. Groupe hydraulique selon l'une des revendications précédentes,
**caractérisé en ce que**
le groupe hydraulique comprend au moins une fonctionnalité de réaspiration (51, 52), qui permet la réaspiration de liquide hydraulique en cas de fuite.

6. Procédé pour le fonctionnement d'un groupe hydraulique pour l'alimentation en pression d'un système de direction hydraulique comprenant au moins deux cylindres hydrauliques (2a, 2b, 27a, 27b) et au moins deux pompes hydrauliques (9, 10, 32, 33),
**caractérisé en ce que**
deux espaces de même type des cylindres hydrauliques (27a, 27b), qui sont agencés en tant que cylindres différentiels, sont reliés respectivement par des conduites hydrauliques (7, 8, 30, 31) et lors d'un mouvement de direction, du liquide hydraulique coule entre les espaces de même type, dans lequel dans les deux conduites hydrauliques (7, 8, 30, 31), le liquide hydraulique est pompé respectivement au moyen de l'une des pompes hydrauliques (9, 10, 32, 33).

7. Procédé selon la revendication 6,
**caractérisé en ce que**
dans le cas d'un dysfonctionnement, la pompe hydraulique (9, 10, 32, 33) dans la conduite hydraulique (7, 8, 30, 31) est contournée au moyen d'un dispositif de vanne (34, 35), de sorte que le liquide hydraulique puisse couler par le dispositif de vanne (34, 35) entre les espaces de même type des cylindres hydrauliques.

8. Système de direction pour un essieu, comprenant au moins deux leviers de direction, au moins deux cylindres hydrauliques et au moins une pompe hydraulique (9, 10, 32, 33),
**caractérisé en ce que**
les deux cylindres hydrauliques (27a, 27b) sont agencés en tant que cylindres différentiels et sont reliés respectivement du même côté de cylindre à un deuxième essieu avant et respectivement avec l'autre côté de cylindre avec l'un des deux leviers de direction, et qu'un espace annulaire (6a, 6b, 28a, 28b) du premier cylindre hydraulique (27a, 27b) est relié par au moins une conduite hydraulique (7, 8, 30, 31) à un espace annulaire (6a, 6b, 28a, 28b) du deuxième cylindre hydraulique (27a, 27b) et une chambre de piston (5a, 5b, 29a, 29b) du premier cylindre hydraulique (27a, 27b) est reliée par au moins une conduite hydraulique (7, 8, 30, 31) à une chambre de piston (5a, 5b, 29a, 29b) du deuxième cylindre hydraulique (2a, 2b, 27a, 27b) et au moins dans une conduite hydraulique entre les deux chambres annulaires (6a, 6b, 28a, 28b) et dans une conduite hydraulique entre les deux chambres de piston (5a, 5b, 29a, 29b) est disposée respectivement une pompe hydraulique (9, 10, 32, 33), dans lequel les cylindres hydrauliques (2a, 2b, 27a, 27b), les pompes hydrauliques (9, 10, 32, 33) et les conduites hydrauliques (7, 8, 30, 31) font partie d'un bloc hydraulique selon l'une des revendications 1 à 5.
